# EUROPEAN PATENT SPECIFICATION

(11) **EP 2 812 358 B1**
(45) Date of publication and mention of the grant of the patent: **24.09.2025**
(21) Application number: 13704063.0
(22) Date of filing: 07.02.2013
(51) Int. Cl.: C08B 3/06, C08H 8/00, B27K 5/00, B27K 3/08

(54) **PROCESS FOR THE ACETYLATION OF WOOD AND ACETYLATED WOOD**
VERFAHREN ZUR ACETYLIERUNG VON HOLZ UND ACETYLIERTES HOLZ
PROCÉDÉ POUR LA ACÉTYLATION DU BOIS ET BOIS ACÉTYLÉ

(30) Priority: 07.02.2012 EP 12154335
(43) Date of publication of application: 17.12.2014
(73) Proprietor: Titan Wood Limited, London EC2R 6EA (GB)
(72) Inventor: POL, Bernardus Jozef Maria, London WC2E 7EN (GB); ALEXANDER, Jonathan Philip, London WC2E 7EN (GB); BONGERS, Hendrikus Petrus Maria, London WC2E 7EN (GB)
(74) Representative: V.O.
(86) International application number: PCT/EP2013/052429
(87) International publication number: WO 2013/117641

(56) References cited:
- EP-A1- 1 491 305
- WO-A1-2009/095687
- WO-A1-2010/151321
- ROGER M. ROWELL: "Chemical Modification of Wood", FOREST PRODUCTS ABSTRATCS, 1 December 1983 (1983-12-01), XP055583232, Retrieved from the Internet <URL:https://www.accoya.com/wp-content/uploads/2014/10/Chemical-Modification-of-Wood.pdf> [retrieved on 20190425]
- "Wood Handbook, Wood as an Engineering Material", 30 April 2010, FOREST PRODUCTS LABORATORY - UNITED STATES DEPARTMENT OF AGRICULTURE FOREST SERVICE, Madison, Wisconsin, article LEBOW STAN T: "Wood Preservation, pg. 343", XP093232195
- "Deterioration and Protection of Sustainable Biomaterials ACS Symposium Series; American Chemical Society: Washington, DC, 2014.", 10 June 2014, AMERICAN CHEMICAL SOCIETY, Washington, DC, article ROWELL ROGER M ET AL: "Acetylation of Wood", XP093232185

## Description

### Field of the Invention

The invention is in the field of acetylated solid wood. Particularly, the invention is in the field of acetylation of medium to high density wood species such as Southern Yellow Pine (SYP).

### Background of the invention

Acetylation of wood has long been recognised as a method to improve the durability of otherwise non-durable softwood species. Also, it is known as a method to improve wood properties, such as hardness and dimensional stability.

A specific problem of acetylation of large pieces of wood on industrial scale is so-called "envelope treatment". Envelope treatment is the acetylation of wood near its surface, leaving the interior wood at a less effective level of acetylation or with no acetylation at all. Wood that is acetylated at different levels at different depths can be exposed directly to moisture when the acetylated piece is planed, profiled or cross-cut. Acetylated wood allows moisture to pass into and out of the entire cross section. In the highly acetylated parts, moisture encounters protected cell walls and cannot be used to support fungal growth. A background reference pertaining to a particularly suitable process avoiding envelope treatment is WO 2009/095687.

However, in the course of applying the described method in practice, it has been found that the method is less suitable for wood species having a higher density, such as Southern Yellow Pine. As a result, the acetylation of Southern Yellow Pine results in a lower acetylation degree than for radiata pine.

It would be desired to be able to acetylate wood species having a medium to high density such as Southern Yellow Pine to a high acetylation degree and a low residual acetic acid degree, with a method that treats the wood uniformly. In addition, the method should be economical and fast and be applicable on an industrial scale.

### Summary of the Invention

In order to better address one or more of the foregoing desires, the invention presents, in one aspect, a process for the acetylation of wood comprising the steps:
(a) in a reaction pressure vessel submerging wood having a moisture content of less than 5% by weight in an acetylation fluid comprising acetic anhydride and/or acetic acid at a temperature of 10°C to 120°C,
(b) increasing the pressure in the vessel to 2 to 20 bar for a period of 1 to 300 minutes,
(c) removing excess acetylation fluid from the vessel,
(d) introducing into the vessel an inert fluid, circulating and heating the fluid until the internal temperature of the wood begins to show an exotherm, controlling the supply of heat to the wood until the exotherm is complete and maintaining the internal temperature of the wood below 180°C,
(e) heating the circulating fluid to a temperature of 85°C to 160°C for a time of 10 to 120 minutes to initiate a second exothermic reaction, controlling the supply of heat to the wood until the exotherm is complete and maintaining the internal temperature of the wood below 180°C,
(f) removing the circulating fluid by evaporation under vacuum wherein the wood to be treated has an ovendry density of above 400 kg/m³ and wherein the wood is wood pieces having a width of from 2 cm to 30 cm, a thickness of from 2 cm to 16 cm and a length of from 1.5 m to 6.0 m.

### Detailed description of the Invention

The invention, in a broad sense, is based on the unexpected finding that medium to high density wood species such as Southern Yellow Pine can be acetylated to high acetylation degrees comparable with those for less dense wood species by applying the method of the invention which starts from a lower moisture content of the wood. The acetylated wood has in addition a low residual acid content and a high compression strength.

Without wishing to be bound by any theory, it is believed that this may be caused by difficulties in sufficient impregnation of a highly dense wooden matrix by an acetylation fluid. The lower impregnation efficiency of the wood would then result in lower acetyl levels in the end product. In addition, due to the high density of the wooden matrix it is believed that it is also more difficult to remove the acetylation fluid from the acetylated wood. This leads to a high level of residual acetic acid in the acetylated wood giving it a characteristic odour of vinegar.

The invention pertains to the acetylation of medium to high density wood species having a dry density above 400 kg/m³, more preferably higher than 450 kg/m³, yet more preferably higher than 500 kg/m³. In a preferred embodiment, the ovendry density of the wood to be treated is in the range from 500 to 750 kg/m³.

A particular example of medium to high density wood species is Southern Yellow Pine. Southern Yellow Pine is one of the most durable and strongest softwoods available. The name refers to a group of species which are classified as yellow pine and originate from Southern United States. The most common species of this group includes species Loblolly, Longleaf, Shortleaf and Slash. The species are similar in properties and behaviour. Southern Yellow Pine is characterised by a relatively high density, usually higher than 420 kg/m³ and typically in the range 500-680 kg/m³. The densities refer to ovendry materials. Although the invention is particularly suitable for relatively high density woods, it can also be used with other wood species, e.g. Scots pine and radiata pine.

Where it is spoken of "wood" this can generally have any form, size or shape. Preferably, the invention pertains to pieces of solid wood, and more preferably to relative large pieces such as beams or boards.

The process of acetylation according to the invention comprises the following steps:
(a) in a reaction pressure vessel submerging wood having a moisture content of less than 5% by weight in an acetylation fluid comprising acetic anhydride and/or acetic acid at a temperature of 10°C to 120°C,
(b) increasing the pressure in the vessel to 2 to 20 bar for a period of 1 to 300 minutes,
(c) removing excess acetylation fluid from the vessel,
(d) introducing into the vessel an inert fluid, circulating and heating the fluid until the internal temperature of the wood begins to show an exotherm, controlling the supply of heat to the wood until the exotherm is complete and maintaining the internal temperature of the wood below 180°C,
(e) heating the circulating fluid to a temperature of 85°C to 160°C for a time of 10 to 120 minutes to initiate a second exothermic reaction, controlling the supply of heat to the wood until the exotherm is complete and maintaining the internal temperature of the wood below 180°C,
(f) removing the circulating fluid by evaporation under vacuum.

The process starts with providing wood. The wood with a low moisture content is necessary for obtaining a good quality end product, therefore, if necessary, the wood should be dried. The dried wood should contain no more than 5% of moisture by weight, preferably between 1 and 4% by weight. Any suitable method for drying wood can be used, for example, kiln drying techniques such as in a vacuum kiln, in a conventional kiln or in a high temperature kiln. Solvent drying techniques are not preferred since they result in that the dried wood may contain solvent traces which need to be removed. The moisture content referred to in this description is measured by means of weighing the wood before the process, for instance directly after a kiln drying process. This wood sample is then put at a temperature of 103±2°C according to norm EN-13183-1, until the difference in mass between two successive weighings separated by an interval of 2 hours is less than 0.1%. This results in a wood which is considered ovendry.

The wood is generally provided in the form of beams. The present invention is of particular value in the acetylation of commercial sized wood pieces. The wood pieces have have-a starting width of 2 to 30 cm, a thickness from 2 to 16 cm, and a length of from 1.5 to 6 m. More preferably, the width of the wood pieces is from 2 to 10 cm, the thickness is from 2 to 10 cm, and the length is from 1.5 to 4 m. Also preferred are wood pieces having a width of 2 to 30 cm, a thickness from 0.9 to 16 cm, and a length of from 1.5 to 6 m.

The wood is further placed in a suitable reaction pressure vessel, or reactor. Any reactor suitable for acetylation of wood beams can be used.

In step (a) the reactor is filled with an acetylation fluid, thereby submerging the wood, at a temperature from 10°C to 120°C. Submerging of wood is preferably done by using vacuum, which may advantageously be carried out by first applying vacuum to the wood in a reaction vessel, and subsequently introducing the acetylation fluid into the vessel. To assure a high impregnation load, the reactor is preferably filled under continuous vacuum. Maintaining the vacuum during filling is important in order to achieve a high load of the acetylation fluid in the wood after impregnation and, consequently, to reach a high impregnation efficiency. Preferably, the reactor is filled at a pressure of less than -0.5 barg, more preferably less than -0.7 barg.

The acetylation fluid comprises acetic anhydride and/or acetic acid. Preferably, the acetylation fluid comprises at least 70 vol.% of acetic anhydride. The acetic acid is preferably present in an amount up to 30 vol.%. A suitable composition, for example, comprises from 80 to 100 vol.% acetic anhydride and 0 to 20 vol.% acetic acid. More preferably, the acetylation fluid comprises from 90 to 99 vol.% acetic anhydride and from 1 to 10 vol.% acetic acid. Preferably, the acetylation fluid has a temperature from 20 to 120°C, 35-75C.

In step (b), the pressure in the vessel is increased to 2 to 20 bar for a period of 1 to 300 minutes. This step is particularly useful when treating large pieces of wood, in order to fully impregnate the wood. Preferably, the pressure is increased to 10 to 15 bar. A preferred impregnation time is from 1 to 90 min, which may depend on the dimensions of the wood to be treated. Pressurisation can be done with nitrogen but also with other inert gases, such as carbon dioxide.

In step (c), the excess acetylation fluid is removed from the vessel after the impregnation. By excess it is meant the acetylation fluid that has not impregnated the wood. It may be removed from the pressure vessel by using existing pressure within the vessel, e.g. nitrogen gas, to force the fluid into a storage vessel, or by pumping the fluid out while maintaining a nitrogen pressure in the vessel. Preferably, the excess acetylation fluid is removed by pressurising with nitrogen gas.

In steps (d) and (e), the reaction vessel is heated up to acetylation temperature and the acetylation takes place. Step (d) comprises introducing into the vessel an inert fluid, circulating and heating the fluid until the internal temperature of the wood begins to show an exotherm, controlling the supply of heat to the wood until the exotherm is complete and maintaining the internal temperature of the wood below 180°C. The inert fluid is a fluid that does not react with acetic anhydride or acetic acid and can typically be gaseous nitrogen, gaseous carbon dioxide or flue gas. In this step, the acetylation fluid is preferably heated to a temperature of from 60 to 150°C, more preferably from 70 to 120°C, for a time of 10-120 minutes, preferably of 15-60 minutes. The commencement, duration and completion of the exotherm is preferably detected and monitored by thermocouples located in the wood. In some instances, the inert fluid, e.g. nitrogen, may be partially or fully saturated with acetic anhydride and/or acetic acid. This can range from 20% to full saturation (100%) by volume.

Step (e) involves heating the circulating fluid to a temperature of from 85°C to 160°C for a time of from 10 to 120 minutes, preferably from 15 to 60 minutes, to initiate a second exothermic reaction, controlling the supply of heat to the wood until the exotherm is complete and maintaining the internal temperature of the wood below 180°C.

During the circulation of the inert fluid, it may be necessary to cool the circulating fluid to avoid the internal temperature of the wood as detected by thermocouples exceeding 180°C, and preferably not exceeding 155°C. During the second exothermic reaction, the circulating fluid is heated to a temperature of from 85 to 160°C, preferably from 100 to 155°C, for a time from 10 to 120 minutes, preferably from 15 to 60 minutes. In general, the total acetylation reaction can take approximately from 0.5 to 5 hours.

In step (f), also referred here to as a chemical recovery step, the acetylation fluid containing the reaction products of acetylation is removed from the wood by evaporation under vacuum. Preferably, the unused acetic anhydride and the by-product acetic acid are condensed from the circulating gas. Applying a vacuum leads to the cooling of the wood, therefore it may be necessary to reheat the wood. Preferably, the wood is reheated during vacuum application to a temperature of from 120 to 160°C. Several pressure and reheating steps may be used until a desired residual acid content is obtained.

After the removal of acetylation products from the wood, the reactor is brought to the atmospheric pressure so that the reactor can be opened to release the acetylated wood.

In the described way, the wood is acetylated to an acetyl content of at least 20% by weight at its geometrical centre. The impregnation and acetylation steps can be repeated in order to further improve the acetylation degree. However, the advantage of the present invention is that the high acetylation degree of the wood can already be achieved in one impregnation and acetylation cycle, which has a considerable economical advantage over conventional multiple stage acetylation methods.

The acetylation method according to the present invention results in acetylated wood with superior properties. The method is especially suitable for the wood species having an ovendry density higher than 500 kg/m³. In a particularly preferred embodiment, the acetylated wood is acetylated Southern Yellow Pine. Also less dense species can be acetylated, e.g. Scots pine and radiata pine. After acetylation, the ovendry density of the wood is preferably higher than 550 kg/m³, more preferably higher than 580 kg/m³ and yet more preferably higher than 600 kg/m³. In a preferred embodiment, the density of the acetylated wood is from 550 to 800 kg/m³.

The acetylated wood obtained by the above method has a high acetylation degree. In particular, it has an acetyl content of higher than 20% by weight at its geometrical center. Preferably, the acetyl content is higher than 21% by weight, more preferably, higher than 22% by weight, yet more preferably higher than 23 % by weight at its geometrical center. In a preferred embodiment, the acetyl content of the acetylated wood is from 21 to 26 wt.% at its geometrical center.

The acetylated wood produced by the method according to the invention has also a high uniformity within a batch and a low gradient of acetyl content within one beam or board. Uniformity within one batch means the variation of the acetyl content as measured in different beams or boards within one batch. High uniformity (or low variation of acetyl content) corresponds to a low difference between the highest and lowest measured acetyl content by weight within one batch. In the wood according to the invention, this difference is less than 4%, preferably less than 3% by weight. More preferably, it is less than 2% by weight. The gradient of the acetyl content within one beam is less than 3%, preferably less than 2%, more preferably less than 1% by weight.

In order to determine the acetyl content of the wood, samples are ground to wood particles. From these samples residual trace amounts of acetic acid and/or acetic anhydride are removed, by washing with water and subsequent drying at 103±2°C for between 14-24 hrs. After weighing these dried samples the acetyl groups are released from the wood in the form of acetate ions by saponification with sodium hydroxide solution at elevated temperature. This saponification reaction runs for 4 hrs, with stirring every 15 minutes. The acetate ions are quantified by means of high-pressure liquid chromatography (HPLC), after calibrating this HPLC with standard acetate solutions and using sodium butyrate as internal reference. This gives a direct measure of acetyl content that is preferred over general weight percentage gain (WPG) frequently used in other studies.

In addition, the acetylated wood produced by the process of the invention has advantageously a very low residual acetic acid (RA) content, which is a measure of the residual, non-bound acetic acid contained in the wood. Acetic acid may also originate from the wood itself, therefore the RA measures both the original acetic acid and the acetic acid left from the acetylation reaction. For determining the residual acid (RA) a well defined amount of 3-5 gram of sample material is shaken in demineralised water for 1 hr. After this extraction step the samples is separated from the water fraction by filtration. Subsequently this water fraction is titrated with a known sodium hydroxide (NaOH) solution, using phenolphthaleine as an indicator, from which the residual acid concentration of the sample can be calculated.

The RA of the acetylated wood is below 1% by weight, preferably below 0.9%, more preferably below 0.5% by weight. Most preferably, the acetylated wood contains less than 0.2% of residual acid by weight. In a preferred embodiment, the RA content is from 0.05 to 0.9 wt.%. This is an advantage since acetylated wood with low levels of residual acetic acid does not have any odour of vinegar and, moreover, does not show corrosive properties.

In a preferred embodiment, the acetylated wood produced by the method according to the invention has an ovendry density between 550 and 800 kg/m³, an acetyl content of at least 20% by weight at its geometrical center and a residual acetic acid content of less than 1% by weight. More preferably, the acetylated wood has an acetyl content of at least 22% by weight at its geometrical center and a residual acid content of less than 0.9% by weight. The acetylated wood has preferably a width of 2 cm to 30 cm a thickness of 2 cm to 16 cm and a length of from 1.5 m to 6.0 m.

The acetylated wood further exhibits better mechanical properties. In particular, the compression strength is enhanced by upto 30% compared to unacetylated wood, which is illustrated in the examples herein below. The acetylated wood has typically a characteristic value of compression strength parallel to the grain in the range 40-60 N/mm². Characteristic values for the compression strength perpendicular to the grain can be obtained in the range 1.90-2.30 N/mm².

The invention is now illustrated in the following, non-limiting examples.

### Example 1 Acetylation of Southern Yellow Pine

About 40 m³ of Southern Yellow Pine boards (38 mm x 140 mm x 3000 mm) with an average moisture content of 2,8% were separated with 15 mm stickers vertically. The wood was loaded into a 150 m³ liquid capacity reaction pressure vessel. The vessel was equipped with a gas loop.

A vacuum was applied to -0.85 barg. The reactor was filled with acetylation fluid (95% acetic anhydride and 5% acetic acid, 60°C) while maintaining the vacuum below -0.70 barg, that resulted in each board being submerged. The reactor was pressurized up to 10 barg for 60 min.

Nitrogen gas, saturated with acetic anhydride, at about 85°C, was used as a heating medium for the acetylation reaction. During the acetylation the pressure in the gas loop increased to 2.5 barg and was kept between 2 and 2.5 barg. The acetylation took about 5 hours in total, including the heating up time.

At the end of the acetylation period, more of the unused acetic anhydride and the by-product acetic acid were condensed from the circulating gas. The temperature was increased gradually to about 130°C. The boards were dried to a point where they contained less than 0.50 wt% of free acetyls (acetic acid and acetic anhydride).

The acetyl level was determined for 18 samples of wooden boards. The acetyl level was found to be 22.6 ± 0.8% (minimum value 21.3%; maximum value 23.9% within the batch). The gradient of the acetyl content within one board was under 2%. The residual acetyl (RA) is 0.2 ± 0.1% (minimum value 0.1%; maximum value 0.4%).

For comparison, Southern Yellow Pine acetylated according to the example given in WO2009/095687, starting from the moisture content of 7 wt.% resulted in the acetyl content from 17 to 20 wt.%.

### Example 2 Compression strength parallel and perpendicular to the grain

The tests undertaken were in accordance with BS 373:1957 (Methods of testing small clear specimens of timber) whereby the resistance to compression was determined both a) parallel to the longitudinal grain, and b) perpendicular to the longitudinal grain. In total 55 samples of untreated and acetylated SYP according to Example 1 were measured on samples of the dimension 20 x 20 x 60 mm.

The characteristic values obtained are shown in Table 1. Due to the acetylation a significant increase of both properties is seen.

**Table 1**

| Property | Untreated | Acetylated | Difference |
|---|---|---|---|
| Characteristic value compression parallel to the grain [N/mm²] | 40.1 | 52.0 | 30% |
| Characteristic value compression perpendicular to the grain [N/mm²] | 1.57 | 2.06 | 31% |

## Claims

1. A process for the acetylation of wood comprising the steps:
(a) in a reaction pressure vessel submerging wood having a moisture content of less than 5% by weight in an acetylation fluid comprising acetic anhydride and/or acetic acid at a temperature of 10°C to 120°C,
(b) increasing the pressure in the vessel to 2 to 20 bar for a period of 1 to 300 minutes,
(c) removing excess acetylation fluid from the vessel,
(d) introducing into the vessel an inert fluid, circulating and heating the fluid until the internal temperature of the wood begins to show an exotherm, controlling the supply of heat to the wood until the exotherm is complete and maintaining the internal temperature of the wood below 180°C,
(e) heating the circulating fluid to a temperature of 85°C to 160°C for a time of 10 to 120 minutes to initiate a second exothermic reaction, controlling the supply of heat to the wood until the exotherm is complete and maintaining the internal temperature of the wood below 180°C,
(f) removing the circulating fluid by evaporation under vacuum, wherein the wood to be treated has an ovendry density of above 400 kg/m³ and wherein the wood is wood pieces having a width of from 2 cm to 30 cm, a thickness of from 2 cm to 16 cm and a length of from 1.5 m to 6.0 m.

2. The process according to claim 1, wherein the wood to be treated has an ovendry density of above 500 kg/m³.

3. The process according to claim 1 or 2, wherein the wood is Southern Yellow Pine or Scots pine.

4. The process according to any one of claims 1 to 3, wherein the moisture content of the wood is from 1 to 4% by weight.

5. The process according to any one of the preceding claims, wherein the acetylation fluid comprises from 70% to 100% by volume of acetic anhydride and from 0% to 30% by volume of acetic acid.

6. The process according to any one of the preceding claims, wherein in step (a) the reactor is filled under continuous vacuum.

7. The process according to any one of the preceding claims, wherein the inert fluid in step (d) is selected from gaseous nitrogen, gaseous carbon dioxide or flue gas.

8. The process according to any one of the preceding claims, wherein the inert fluid is heated to a temperature of 60°C to 150°C in step (d).

9. The process according to any one of the preceding claims, wherein the inert fluid is partially or fully saturated with acetic anhydride and/or acetic acid.

10. The process according to any one of the preceding claims, wherein the wood is acetylated to an acetyl content of at least 20% by weight at its geometrical centre.

## Patentansprüche

1. Verfahren zur Acetylierung von Holz, umfassend die Schritte:
(a) in einem Reaktionsdruckbehälter Eintauchen von Holz mit einem Feuchtigkeitsgehalt von weniger als 5 Gew.-% in ein Acetylierungsfluid, umfassend Essigsäureanhydrid und/oder Essigsäure, bei einer Temperatur von 10 °C bis 120 °C,
(b) Erhöhen des Drucks in dem Behälter von 2 auf 20 bar für eine Periode von 1 bis 300 Minuten,
(c) Entfernen von überschüssigem Acetylierungsfluid aus dem Behälter,
(d) Einbringen eines inerten Fluids in den Behälter, Zirkulieren und Erhitzen des Fluids, bis die Innentemperatur des Holzes beginnt, eine Exotherme zu zeigen, Steuern der Zufuhr von Wärme zu dem Holz, bis die Exotherme abgeschlossen ist, und Halten der Innentemperatur des Holzes unter 180 °C,
(e) Erhitzen des zirkulierenden Fluids auf eine Temperatur von 85 °C bis 160 °C für eine Zeit von 10 bis 120 Minuten, um eine zweite exotherme Reaktion zu initiieren, Steuern der Zufuhr von Wärme zu dem Holz, bis die Exotherme abgeschlossen ist, und Halten der Innentemperatur des Holzes unter 180 °C,
(f) Entfernen des zirkulierenden Fluids durch Verdampfung unter Vakuum, wobei das zu behandelnde Holz eine ofentrockene Dichte von mehr als 400 kg/m³ hat und wobei das Holz Holzstücke sind mit einer Breite von 2 cm bis 30 cm, einer Dicke von 2 cm bis 16 cm und einer Länge von 1,5 m bis 6,0 m.

2. Verfahren nach Anspruch 1, wobei das zu behandelnde Holz eine ofentrockene Dichte von mehr als 500 kg/m³ hat.

3. Verfahren nach Anspruch 1 oder 2, wobei das Holz südliche Gelbkiefer oder Waldkiefer ist.

4. Verfahren nach einem der Ansprüche 1 bis 3, wobei der Feuchtigkeitsgehalt des Holzes von 1 bis 4 Gew.-% beträgt.

5. Verfahren nach einem der vorhergehenden Ansprüche, wobei das Acetylierungsfluid von 70 Volumen-% bis 100 Volumen-% Essigsäureanhydrid und von 0 Volumen-% bis 30 Volumen Essigsäure umfasst.

6. Verfahren nach einem der vorhergehenden Ansprüche, wobei der Reaktion in Schritt (a) unter Dauervakuum befüllt wird.

7. Verfahren nach einem der vorhergehenden Ansprüche, wobei das inerte Fluid in Schritt (d) ausgewählt ist aus gasförmigem Stickstoff, gasförmigem Kohlenstoffdioxid oder Rauchgas.

8. Verfahren nach einem der vorhergehenden Ansprüche, wobei das inerte Fluid in Schritt (d) auf eine Temperatur von 60 °C bis 150 °C erhitzt wird.

9. Verfahren nach einem der vorhergehenden Ansprüche, wobei das inerte Fluid partiell oder vollständig mit Essigsäureanhydrid und/oder Essigsäure gesättigt ist.

10. Verfahren nach einem der vorhergehenden Ansprüche, wobei das Holz in seiner geometrischen Mitte auf einen Acetylgehalt von mindestens 20 Gew.-% acetyliert wird.

## Revendications

1. Procédé d'acétylation de bois comprenant les étapes suivantes :
(a) dans un récipient sous pression de réaction, l'immersion de bois présentant une teneur en humidité inférieure à 5 % en poids dans un fluide d'acétylation comprenant de l'anhydride acétique et/ou de l'acide acétique à une température de 10 °C à 120 °C,
(b) l'augmentation de la pression dans le récipient à 2 à 20 bar pendant une période de 1 à 300 minutes,
(c) l'élimination de l'excès de fluide d'acétylation du récipient,
(d) l'introduction dans le récipient d'un fluide inerte, la circulation et le chauffage du fluide jusqu'à ce que la température interne du bois commence à présenter une exothermie, la commande de l'alimentation en chaleur du bois jusqu'à ce que l'exothermie soit complète et le maintien de la température interne du bois en dessous de 180 °C,
(e) le chauffage du fluide en circulation à une température de 85 °C à 160 °C pendant une durée de 10 à 120 minutes pour initier une seconde réaction exothermique, la commande de l'alimentation en chaleur du bois jusqu'à ce que l'exothermie soit terminée et le maintien de la température interne du bois en dessous de 180 °C,
(f) l'élimination du fluide en circulation par évaporation sous vide, dans lequel le bois à traiter présente une densité anhydre supérieure à 400 kg/m³ et dans lequel le bois est composé de morceaux de bois présentant une largeur de 2 cm à 30 cm, une épaisseur de 2 cm à 16 cm et une longueur de 1,5 m à 6,0 m.

2. Procédé selon la revendication 1, dans lequel le bois à traiter présente une densité anhydre supérieure à 500 kg/m³.

3. Procédé selon la revendication 1 ou 2, dans lequel le bois est du pin des marais ou du pin d'Écosse.

4. Procédé selon l'une quelconque des revendications 1 à 3, dans lequel la teneur en humidité du bois est de 1 à 4 % en poids.

5. Procédé selon l'une quelconque des revendications précédentes, dans lequel le fluide d'acétylation comprend de 70 % à 100 % en volume d'anhydride acétique et de 0 % à 30 % en volume d'acide acétique.

6. Procédé selon l'une quelconque des revendications précédentes, dans lequel, à l'étape (a), le réacteur est rempli sous vide continu.

7. Procédé selon l'une quelconque des revendications précédentes, dans lequel le fluide inerte à l'étape (d) est sélectionné parmi l'azote gazeux, le dioxyde de carbone gazeux ou le gaz de combustion.

8. Procédé selon l'une quelconque des revendications précédentes, dans lequel le fluide inerte est chauffé à une température de 60 °C à 150 °C à l'étape (d).

9. Procédé selon l'une quelconque des revendications précédentes, dans lequel le fluide inerte est partiellement ou totalement saturé en anhydride acétique et/ou en acide acétique.

10. Procédé selon l'une quelconque des revendications précédentes, dans lequel le bois est acétylé à une teneur en acétyle d'au moins 20 % en poids au niveau de son centre géométrique.
